# EUROPÄISCHE PATENTSCHRIFT

(11) **EP 1 254 327 B1**
(45) Veröffentlichungstag und Bekanntmachung des Hinweises auf die Patenterteilung: **07.05.2003**
(21) Anmeldenummer: 01923558.9
(22) Anmeldetag: 03.02.2001
(51) Int. Cl.: F16H 57/02

(54) **ENDGETRIEBE FÜR EINE PORTALACHSE**
FINAL DRIVE FOR A OFFSET AXLE
TRANSMISSION TERMINALE POUR PONT DEPORTE

(30) Priorität: 11.02.2000 DE 10006021
(43) Veröffentlichungstag der Anmeldung: 06.11.2002
(73) Patentinhaber: ZF FRIEDRICHSHAFEN Aktiengesellschaft, 88038 Friedrichshafen (DE)
(72) Erfinder: ALESCH, Klaus, 94107 Untergriesbach (DE)
(86) Internationale Anmeldenummer: EP0101169
(87) Internationale Veröffentlichungsnummer: WO01059332

(56) Entgegenhaltungen:
- DE-A- 2 116 441
- DE-A- 19 604 730
- US-A- 3 666 036
- US-A- 4 223 570
- US-A- 4 790 210
- US-A- 4 793 200

## Beschreibung

Die Erfindung betrifft ein Endgetriebe für eine Portalachse nach dem Oberbegriff von Anspruch 1.

Bei Kraftfahrzeugen, Arbeits- und Nutzfahrzeugen wird die Antriebsleistung in der Regel von einem Motor aus über ein schaltbares Getriebe auf ein Ausgleichsgetriebe übertragen. Von dort aus werden die anzutreibenden Räder über rechts- und linksseitige Achswellen angetrieben. Um den Antriebsstrang mit dem Schaltgetriebe, dem Ausgleichsgetriebe und den Antriebswellen sowie die Bremsen von den Kräften her klein dimensionieren zu können, werden an den Enden den Achsen Endgetriebe vorgesehen, deren Übersetzung groß sein soll. Die Endgetriebe können in manchen Anwendungsfällen einen weiteren Zweck erfüllen, nämlich einen Achsversatz zwischen dem Ausgleichsgetriebe und der Radnabe zu schaffen. Solche Portalachsen ermöglichen bei geländegängigen Fahrzeugen eine große Bodenfreiheit, während sie bei Bussen und Nutzfahrzeugen im Nahverkehr eingesetzt werden, um eine niedrigere Ladefläche oder Flurhöhe zu erreichen. Eine niedrige Flurhöhe erleichtert den Fahrgästen ein zügiges Ein- und Aussteigen.

Derartige Portalachsen sind durch die gattungsgemäße DE 21 16 441 B2 bzw. die EP 0 877 672 B1 bekannt. Die zuletzt genannte Druckschrift zeigt ein gattungsmäßiges Endgetriebe, bei dem ein Antriebsritzel über Zwischenzahnräder ein Zahnrad auf einer Abtriebswelle antreibt. Die Zahnräder sind in der Regel über Wälzlager, z.B. Kegelrollenlager, im Gehäuse gelagert. Die Zwischenräder sind häufig auf Lagerbolzen angeordnet, die seitlich durch eine Lageröffnung in das Getriebegehäuse eingebracht werden und auf der gegenüberliegenden Seite mittels einer Schraube gehalten sind. Durch die Lageröffnung für den Lagerbolzen wird die Bauteilfestigkeit der Gehäusewand verringert.

Aus Gründen der Belastbarkeit, Lebensdauer und Laufruhe der Lager und Getriebeteile sind die Spiele der Wälzlager präzise einzustellen. Dies erfolgt in der Regel durch Distanzscheiben, die zwischen einem Absatz des Lagerbolzens auf der der Schraube zugewandten Seite des Lagerbolzens und der angrenzenden Gehäusewand angeordnet sind. Die Montage bzw. Demontage der Distanzscheibe ist bedingt durch die ungünstige Lage sehr zeitaufwendig und umständlich. Ferner wird durch die Montageöffnung die Bauteilfestigkeit im Bereich der Montageöffnung beeinträchtigt.

Der Erfindung liegt die Aufgabe zugrunde, das Eistellen des Lagerspiels zu vereinfachen und die Bauteilfestigkeit im Bereich der Montageöffnung zu verbessern. Sie wird gemäß der Erfindung durch die Merkmale des Anspruchs 1 gelöst. Weitere Ausgestaltungen ergeben sich aus den Unteransprüchen.

Nach der Erfindung ist der einstellbare Anschlag auf der Seite der Montageöffnung angeordnet. Er wird von einem Bund am Lagerbolzen und einer Gehäusewand gebildet und ist durch einen Distanzring einstellbar. Auf Grund der Montageöffnung ist er leicht zugänglich und kann somit einfach montiert und demontiert werden. Ferner stützt sich der Bund des Lagerbolzens seitlich an der Gehäusewand ab und verbessert somit die Bauteilfestigkeit. Der Bund kann am Ende des Lagerbolzens an diesem angeformt sein. Damit er keine zusätzliche Baulänge beansprucht, ist er zweckmäßigerweise in einer Ausnehmung der Gehäusewand eingelassen.

Die Montage und Demontage kann noch dadurch vereinfacht werden, dass ein Federring in eine Ringnut des Lagerbolzens eingelassen ist und den Bund bildet. Der Federring legt sich an eine Flanke der Ringnut an und drückt den Distanzring gegen die Gehäusewand, wenn die Schraube angezogen wird.

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Es zeigen:

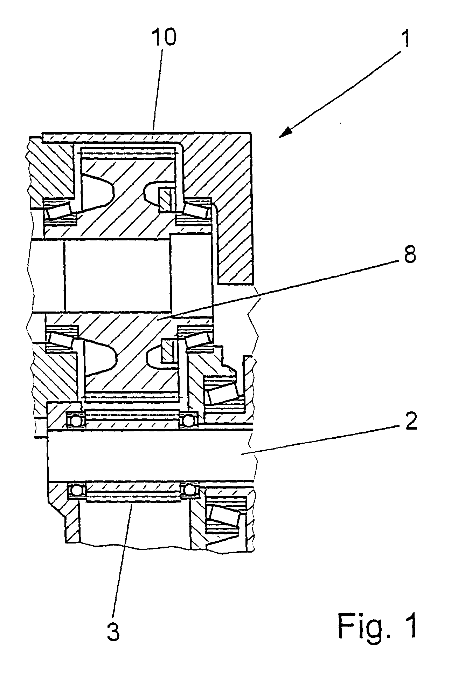

- Fig. 1: einen teilweisen Längsschnitt durch ein erfindungsgemäßes Endgetriebe,
- Fig. 2: ein Räderschema eines Endgetriebes nach Fig. 1 und
- Fig. 3: einen teilweisen Längsschnitt durch eine Lagerung eines Zwischenrads.

Das dargestellte Endgetriebe 1 umfasst eine Eingangswelle 2, die in einem Getriebegehäuse 10 gelagert ist und mit der ein Eingangsritzel 3 drehfest verbunden ist. Die Eingangswelle 2 ist einstückig, aber auf jeden Fall drehfest mit einer nicht näher dargestellten Achswelle verbunden, die von einem ebenfalls nicht dargestellten Ausgleichsgetriebe angetrieben wird.

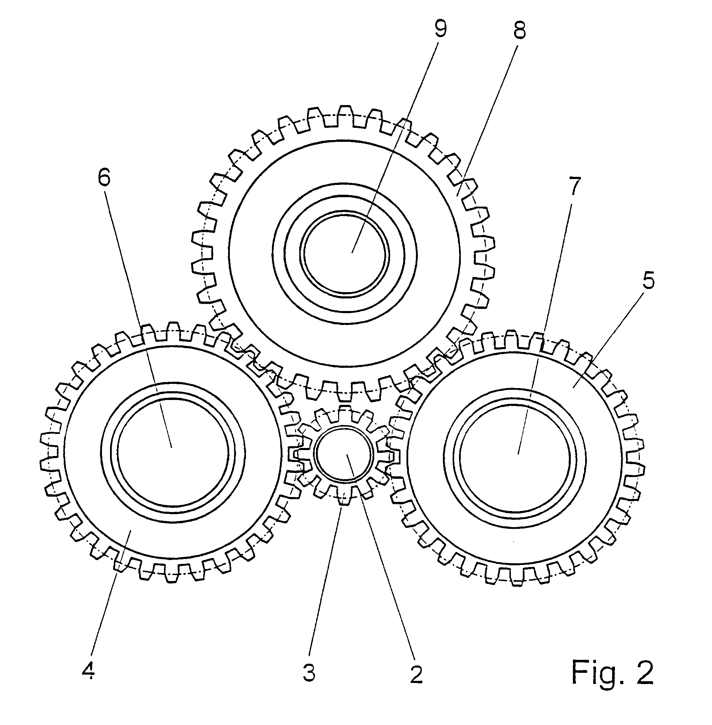

Das Antriebsritzel 3 kämmt mit Zwischenzahnrädern 4 und 5, die eine Leistungsverzweigung bilden und gemeinsam ein Zahnrad 8 auf einer Abtriebswelle 9 antreiben. Die Abtriebswelle 9 kann einstückig, zumindest aber drehfest mit einer nicht näher dargestellten Radwelle verbunden sein (Fig. 2).

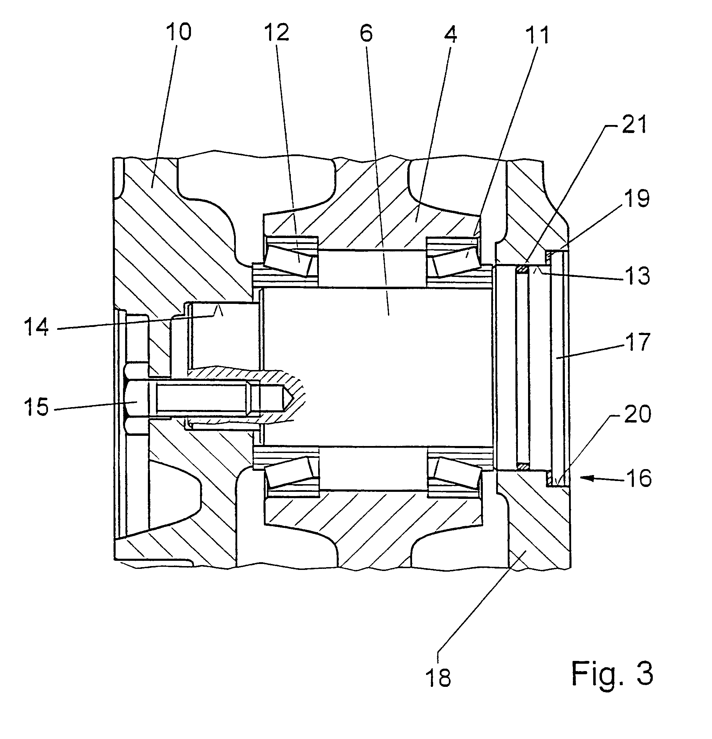

Die Zwischenräder 5, 6 sind jeweils auf einem Lagerbolzen 6, 7 im Getriebegehäuse 10 mittels Wälzlager 11 und 12 in Form von Schrägrollenlagern oder Kegelrollenlagern gelagert, die auf den Lagerbolzen 6, 7 angeordnet sind. Fig. 3 zeigt im vergrößerten Maßstab einen Teilschnitt durch die Lagerung des Zwischenzahnrads 4. Der zugehörige Lagerbolzen 6 wird durch eine Montageöffnung 13 in das Getriebegehäuse 10 gesteckt, wobei die Montageöffnung 13 gleichzeitig zur Lagerung des Lagerbolzens 6 in der Gehäusewand 18 dient. Ein Dichtring 21 dichtet die Montageöffnung 13 nach außen hin ab.

Auf der Seite, die der Montageöffnung 13 gegenüberliegt, befindet sich eine Ausnehmung 14, in die der Lagerbolzen 6 mit einem Zapfen eingreift und durch eine Schraube 15 gehalten wird. Die Schraube 15 zieht den Lagerbolzen 6, der im Bereich der Montageöffnung 13 einen Bund 17 aufweist, mit diesem gegen die Gehäusewand 18. Der so gebildete Anschlag 16 kann durch einen Distanzring 19 so eingestellt werden, dass sich an den Wälzlagern 11 und 12 ein optimales Lagerspiel ergibt. Um die Baulänge des Endgetriebes 1 nicht zu vergrößern, ist der Bund 17 in eine Ausnehmung 20 der Gehäusewand 18 eingelassen. Der Bund 17 kann gemäß einer nicht dargestellten Ausgestaltung durch einen Federring gebildet werden, der in eine Ringnut des Lagerbolzens 6 eingelassen ist und sich einerseits an einer Nutflanke der Ringnut und andererseits an dem Distanzring 19 abstützt. Zur Montage und Demontage kann der Lagerbolzen 6 nach Lösen der Schraube 15 um einen gewissen Betrag axial verschoben werden. Daraufhin kann der Federring entfernt und der Distanzring 19 ausgetauscht bzw. durch einen anderen mit einem geänderten axialen Maß ersetzt werden. Daraufhin wird die Schraube 15 wieder angezogen.

### Bezugszeichen

- 1: Endgetriebe
- 2: Eingangswelle
- 3: Eingangsritzel
- 4: Zwischenzahnrad
- 5: Zwischenzahnrad
- 6: Lagerbolzen
- 7: Lagerbolzen
- 8: Zahnrad
- 9: Abtriebswelle
- 10: Getriebegehäuse
- 11: Wälzlager
- 12: Wälzlager
- 13: Montageöffnung
- 14: Ausnehmung
- 15: Schraube
- 16: Anschlag
- 17: Bund
- 18: Gehäusewand
- 19: Distanzring
- 20: Ausnehmung
- 21: Dichtring

## Patentansprüche

1. Endgetriebe (1) für eine Portalachse mit einem Eingangsritzel (3), das über mindestens ein Zwischenzahnrad (4, 5) ein Zahnrad (8) auf einer Abtriebswelle (9) antreibt, wobei das Zwischenzahnrad (4, 5) auf einem Lagerbolzen (6, 7) in einem Getriebegehäuse (10) gelagert ist, der Wälzlager (11, 12) trägt, **dadurch gekennzeichnet, dass** der Lagerbolzen (6, 7) durch eine Montageöffnung (13) in das Getriebegehäuse (10) eingesetzt und auf der gegenüberliegenden Seite in einer Ausnehmung (14) des Getriebegehäuses (10) durch eine Schraube (15) gegen einen einstellbaren Anschlag (16) gehalten ist, welcher auf der Seite mit der Montageöffnung (13) angeordnet ist und von einem Bund (17) am Lagerbolzen (6, 7) und einer Gehäusewand (18) gebildet und durch einen Distanzring (19) einstellbar ist.

2. Endgetriebe (1) nach Anspruch 1, **dadurch gekennzeichnet, dass** der Bund (17) am Ende des Lagerbolzens (6, 7) an diesen angeformt und in eine Ausnehmung (20) der Gehäusewand (18) eingelassen ist.

3. Endgetriebe (1) nach Anspruch 1, **dadurch gekennzeichnet, dass** ein Federring in eine Ringnut des Lagerbolzens (6, 7) eingelassen ist und den Bund (17) bildet.

## Claims

1. Final transmission (1) for a gantry axle, the said transmission having an input pinion (3) which drives a gear (8) on an output shaft (9) via at least one intermediate gear (4, 5), wherein the said intermediate gear (4, 5) is mounted on a bearing pin (6, 7) in a transmission housing (10), which bearing pin carries antifriction bearings (11, 12), **characterised in that** the said bearing pin (6, 7) is inserted in the transmission housing (10) through an assembly aperture (13) and, on the opposite side, is held in a recess (14) in the transmission housing (10) by a screw (15) against an adjustable stop (16) which is disposed on the side having the assembly aperture (13), is formed by a collar (17) on the bearing pin (6, 7) and by a housing wall (18), and can be adjusted by a spacer ring (19).

2. Final transmission (1) according to claim 1, **characterised in that** the collar (17) at the end of the bearing pin (6, 7) is formed onto the latter and let into a recess (20) in the housing wall (18).

3. Final transmission (1) according to claim 1, **characterised in that** a spring ring is let into an annular groove in the bearing pin (6, 7) and forms the collar (17).

## Revendications

1. Transmission d'extrémité (1) pour un axe à portique avec un pignon d'entrée (3), entraînant une roue dentée (8) sur un arbre de sortie (9) par l'intermédiaire d'au moins une roue dentée intermédiaire (4, 5), la roue dentée intermédiaire (4, 5) étant logée sur un tourillon (6, 7) dans un carter de transmission (10), comportant des paliers à roulements (11, 12), **caractérisée en ce que** le tourillon (6, 7) est inséré dans le carter de transmission (10) par une ouverture de montage (13) et est maintenu du côté opposé dans un évidement (14) du carter de transmission (10) à l'aide d'une vis (15) contre une butée réglable (16) située du côté de l'ouverture de montage (13), constituée d'un collet (17) sur le tourillon (6, 7) et d'une paroi de carter (18), et ajustable à l'aide d'une bague d'écartement (19).

2. Transmission d'extrémité (1) selon la revendication 1, **caractérisée en ce que** le collet (17) est formé à l'extrémité du tourillon (6, 7) et inséré dans un évidement (20) de la paroi du carter (18).

3. Transmission d'extrémité (1) selon la revendication 1, **caractérisée en ce qu'**une bague élastique est insérée dans une gorge de retenue du tourillon (6, 7) et constitue la butée (17).
